Europäisches Patentamt

(19) European Patent Office

Office européen des brevets

(11) Publication number : 0 188 299 B1

## (12) EUROPEAN PATENT SPECIFICATION

(45) Date of publication of patent specification :
05.06.91 Bulletin 91/23

(51) Int. Cl.⁵ : **B65D 81/34**, A47J 31/08

(21) Application number : 86200019.7

(22) Date of filing : 07.01.86

(54) A filter cartridge for making a beverage.

(30) Priority : 07.01.85 NL 8500029

(43) Date of publication of application :
23.07.86 Bulletin 86/30

(45) Publication of the grant of the patent :
05.06.91 Bulletin 91/23

(84) Designated Contracting States :
AT BE CH DE FR GB IT LI LU NL SE

(56) References cited :
WO-A-81/01429
US-A- 3 420 675

(73) Proprietor : Douwe Egberts Koninklijke
Tabaksfabriek- Koffiebranderijen-Theehandel
N.V.
Keulsekade 143
NL-3532 AA Utrecht (NL)

(72) Inventor : Rusche, Emil Herman
Wolverslaan 84
NL-3454 GN De Meern (NL)

(74) Representative : Smulders, Theodorus A.H.J.,
Ir. et al
Vereenigde Octrooibureaux Nieuwe Parklaan
107
NL-2587 BP 's-Gravenhage (NL)

## Description

The invention relates to a filter cartridge for making coffee by infusion of water, comprising ground coffee to be extracted during the infusion and serving as a basis for the beverage, said ground coffee being confined in a filter chamber which comprises two substantially parallel pellicular filters of fibrous material interconnected by a filter body (see e.g. Belgian patent 661,534 in the name of MIKO). The filter cartridge is installed in a reservoir for receiving the hot water necessary for the brew (the filter pan). See Dutch patent application 83.00213, corresponding to European patent no. 114,717, of Applicants. After installing the filter cartridge in the filter pan, hot water is infused. This percolates through the upper filter, impregnates and extracts the ground coffee and percolates again out of the filter cartridge via the lower filter. The two above mentioned filters are normally made of paper. Naturally, use can also be made of a construction in which the filter pan and the filter cartridge form a unit (see e.g. Swiss patent 436,614 of MIKO).

According to the invention, it has been found that in the existing filter cartridges, after completion of the brewing process (i.e. after termination of the percolation flow from the lower filter), substantial, varying, quantities of 'free' brew remain in the filter cartridge. Free brew means brew that is not retained by the grounds. This not only means loss of product. In removing the filter cartridge from the filter pan, owing to the movements to which this is subjected, this quantity of liquid originally retained in the cartridge may be released, resulting in 'spilling'. To give an impression of the quantities involved, and of the problems going therewith, it is observed that for filter cartridges for institutional use (e.g. suitable for 14 cups) this quantity may be as much as 70 cm³.

Applicants have now found that the retention of free brew in the filter cartridge is caused by the fact that there remains in the filter pores, due to the hydrophylic character, a water film that is resistant to the ingress of air. In fact, if the last remainders of brew are to flow away from the filter chamber through the lower filter, the volume occupied by this quantity of brew should be replaced by air ingressing from the top through the upper filter. After the percolation flow through the lower filter has stopped, the hydrostatic pressure of the layer of free brew in the filter chamber plus the pressure of the air in the filter chamber above said layer of free brew is 1 atm. This means that in the air in the filter chamber a subatmospheric pressure prevails, equal to the hydrostatic pressure of the layer of free brew. Apparently, the surface tension of the water film retained in the upper filter is such that the pressure difference of the air above and underneath the upper filter is not sufficient to break this water film.

According to the invention a filter cartridge for making coffee by infusion of water, comprising ground coffee to be extracted during the infusion and serving as a basis for the beverage, said ground coffee being confined in a filter chamber which comprises two substantially parallel pellicular filters of fibrous material interconnected by a filter body, wherein at least the upper filter has locally such a structure that a water film remaining in this filter after the brewing is broken by a subatmospheric pressure in the filter chamber of less than 20 mm water, is characterized in that the upper filter is formed of pellicular material composed of fibres, the permeability to air of the material in wet condition being increased by spraying it during the production process with fine water jets before the major part of the dispersing medium for the fibres has been removed. A limiting property in respect of this free permeability to air, however, is the strength of the filter, which should remain sufficient for normal use, i.e. the operations necessary for attaching the filter to the filter body and the operations effected during the packaging, shipping etc. of the filter cartridges.

Moreover, care should be taken that no such quantities of fine coffee particles can escape as to be visually unacceptable, either before or after brewing.

For the sake of good order it is observed that US-A-3,420,675 relates to the formerly frequently employed percolation system, wherein a given amount of liquid has to pass through a filter several times. The problem going therewith is that the percolation time is mostly too long. The solution Costas has chosen is to provide a plurality of openings in the filter that have a given size, so that the water can percolate more easily, but the swollen coffee particles are retained (in this connection it is observed that Costas uses a coarsely ground product). However, the present invention concerns the avoidance of residual water in the filter cartridge. Therefore, Applicants have looked for a special filter paper which is air-permeable in wet condition. For the sake of completeness, it is observed that Costas cannot solve his problems by using the Dexter filter material, because the permeability of the Dexter material is insufficient to allow the passage of the desired amount of liquid, in other words, there is an accumulation of liquid on the upper filter paper.

In contrast thereto, the present application is not concerned with increasing the water permeability, as is Costas, but with an air-permeability in wet condition. True, piercing holes would offer a solution, but this has certain drawbacks ; i.e. this implies a separate treatment of commercially available types of paper and hence a complication of the manufacturing process of the filter cartridges. An easier and hence preferred embodiment of the invention is the use of commercially available special types of paper. In this connection, paper means quite generally pellicular, fibrous material. Highly suitable has been found e.g. pellicular material composed of fibres, made as paper by the wet process, in which the permeability to air of the material in wet condition has been increased by spraying it with fine water jets before the major part of the dispersing medium for the fibres has been drawn off, during the production process. In this way small 'craters' are formed in the paper. The 'bottom' of these craters contains so few fibres, which in addition are spaced so far apart that a water film present between these fibres is easily broken, i.e. even in the case of the small pressure differentials between bottom and top of the filter as mentioned above, i.e. in the order of magnitude of 3-10 mm water.

Material meeting the requirement set is e.g. described in European patent 0039686 that corresponds to WO 81/01429. Suitable for instance is such material having a basis weight of 12-20 g/m², a thickness of between 70-100 microns, a tensile strength in the dry state in longitudinal direction of 500-1,000 Newton per m, and in transverse direction 200-400 Newton per m, in the wet state in transverse direction 50-100 Newton per m, air permeability in the dry state 1,000-1,500 liters per minute per 100 cm² at an applied pressure of 12.5 mm water. Paper meeting these conditions is marketed e.g. by the firm of Dexter (One Elm Street, Windsor Locks, USA), under code numbers 5701, 6650.

In this special case the material is formed of two layers, the lower layer consisting of cellulose fibres, the upper layer of synthetic plastics fibres.

The craters are then formed by 'squirting away' the fibres of the upper layer locally by water jets.

## Claims

1. A filter cartridge for making coffee by infusion of water, comprising ground coffee to be extracted during the infusion and serving as a basis for the beverage, said ground coffee being confined in a filter chamber which comprises two substantially parallel pellicular filters of fibrous material interconnected by a filter body, wherein at least the upper filter has locally such a structure that a water film remaining in this filter after the brewing is broken by a subatmospheric pressure in the filter chamber of less than 20 mm water, characterized in that the upper filter is formed of pellicular material composed of fibres, the permeability to air of the material in wet condition being increased by spraying it during the production process with fine water jets before the major part of the dispersing medium for the fibres has been removed.

2. A filter cartridge according to claim 1, characterized in that the filter has such a structure that a water film remaining in this filter is broken by a subatmospheric pressure in the filter chamber of 0.5-5 mm water.

3. A filter cartridge according to claim 1 or 2, characterized in that the filter has at least one hole therein so small that coffee particles larger than 0.1 mm cannot emerge from the filter cartridge.

## Revendications

1. Cartouche filtrante pour faire du café par introduction d'eau, comprenant du café moulu devant être extrait pendant l'introduction d'eau et servant de base pour la boisson, ledit café moulu étant confiné dans une chambre à filtres, qui comprend deux filtres pelliculaires sensiblement parallèles, formés d'un matériau fibreux et interconnectés par un corps filtrant, et dans laquelle au moins le filtre supérieur possède localement une structure telle qu'une pellicule d'eau subsistant dans ce filtre après la formation de la boisson est rompue par une pression subatmosphérique présente dans la chambre à filtres et inférieure à 20 mm d'eau, caractérisée en ce que le filtre supérieur est formé d'un matériau pelliculaire constitué de fibres, la perméabilité à l'air du matériau à l'état humide étant accrue sous l'effet de la projection de fins jets d'eau sur ce matériau pendant le processus de fabrication de la boisson, avant que la partie principale du milieu dispersant pour les fibres ait été retirée.

2. Cartouche filtrante selon la revendication 1, caractérisée en ce que le filtre possède une structure telle qu'une pellicule d'eau subsistant dans ce filtre est rompue par une pression subatmosphérique régnant dans la chambre à filtres et égale à 0,5-5 mm d'eau.

3. Cartouche filtrante selon la revendication 1 ou 2, caractérisée en ce que le filtre possède au moins un trou suffisamment petit pour que les particules de café d'une taille supérieure à 0,1 mm ne puissent pas sortir de la cartouche filtrante.

## Ansprüche

1. Filterpatrone zum Herstellen von Kaffee durch Aufguß mit Wasser, welche beim Aufgießen zu extrahierenden und als Basis des Getränkes dienenden gemahlenen Kaffee aufweist, wobei der gemahlene Kaffee in einer Filterkammer eingeschlossen ist, die zwei im wesentlichen parallele, membranartige Filter aus faserförmigem Material aufweist, welche von einem Filterkörper verbunden sind, wobei zumindest der obere Filter stellenweise eine solche Struktur aufweist, daß ein nach dem Aufbrühen im Filter verbleibender Wasserfilm durch einen subatmosphärischen Druck in der Filterkammer von weniger als 20 mm Wassersäule aufgebrochen wird, **dadurch gekennzeichnet,** daß der obere Filter aus einem aus Fasern bestehenden, membranartigen Material gebildet ist, dessen Durchlässigkeit für Luft im feuchten Zustand dadurch erhöht wird, daß es beim Herstellungsvorgang mit feinen Wasserstrahlen besprüht wird, bevor der größere Teil des Dispersionsmediums für die Fasern entfernt worden ist.

2. Filterpatrone nach Anspruch 1, dadurch gekennzeichnet, daß der Filter eine derartige Struktur hat, daß ein in diesem Filter verbleibender Wasserfilm durch einen subatmosphärischen Druck in der Filterkammer von 0,5 bis 5 mm Wassersäule aufgebrochen werden kann.

3. Filterpatrone nach Anspruch 1 oder 2, dadurch gekennzeichnet, daß der Filter wenigstens ein Loch enthält, welches so klein ist, daß Kaffeepartikel größer als 0,1 mm nicht aus der Filterpatrone austreten können.